Europäisches Patentamt

European Patent Office

Office européen des brevets

(11) Numéro de publication: **0 295 181 B1**

(12) **FASCICULE DE BREVET EUROPEEN**

(45) Date de publication de fascicule du brevet: **25.11.92**  (51) Int. Cl.5: **B01D 51/10**, G21C 19/30,
G05D 22/00

(21) Numéro de dépôt: **88401396.2**

(22) Date de dépôt: **08.06.88**

(54) **Procédé de désaturation de gaz extrait et application à des systèmes de transfert de liquide sous vide.**

(30) Priorité: **12.06.87 FR 8708216**

(43) Date de publication de la demande:
**14.12.88 Bulletin  88/50**

(45) Mention de la délivrance du brevet:
**25.11.92 Bulletin  92/48**

(84) Etats contractants désignés:
**CH DE GB IT LI**

(56) Documents cités:
**DE-A- 1 912 902**
**DE-C- 252 431**

(73) Titulaire: **COMMISSARIAT A L'ENERGIE ATO-
MIOUE Etablissement de Caractère Scientifique Technique et Industriel
31/33, rue de la Fédération
F-75015 Paris(FR)**

(72) Inventeur: **Farrugia, Jean-Marie
19, rue de l'Orient
F-30133 Les Angles(FR)**
Inventeur: **Delagrange, Jacques
Villa 8-Paniscoule
F-30200 Bagnols Sur Ceze(FR)**

(74) Mandataire: **Mongrédien, André et al
c/o BREVATOME 25, rue de Ponthieu
F-75008 Paris(FR)**

Rank Xerox (UK) Business Services

## Description

La présente invention a pour objet un procédé et un dispositif pour la désaturation de l'air extrait des systèmes de transfert sous vide applicable notamment aux systèmes de mise en circulation de liquide par air-lift utilisés dans l'industrie nucléaire.

Le transfert de fluides radioactifs nécessite dans de nombreux cas l'utilisation de moyens placés sous protection biologique ou dans une enceinte de confinement. Cette disposition est imposée par le niveau de radioactivité des fluides transportés.

En conséquence, l'entretien de ces moyens est rendu difficile en raison des contraintes d'accès. De ce fait, on utilise aussi souvent que possible des systèmes qui ne comportent pas de pièces en mouvement, qui sont insensibles aux rayonnements et qui présentent une bonne résistance à la corrosion.

Parmi les systèmes répondant à ces critères, on trouve les éjecteurs à air ou à vapeur, les siphons, les air-lifts,... Certains de ces systèmes utilisent le vide soit comme élément initiateur du transfert, ce qui est le cas pour les siphons, soit comme élément concourant au transfert (c'est le cas des air-lifts sous vide). Le vide peut être produit soit par un système installé sous protection biologique lorsque les besoins sont de faible importance, soit dans une centrale implantée hors protection biologique (c'est-à-dire dans une zone accessible sans protection particulière) lorsque les besoins sont plus importants.

L'installation d'une centrale de production de vide en dehors des protections biologiques impose de traiter l'air ayant transité dans les circuits contaminés afin de limiter au plus bas niveau possible le transfert de contamination vers l'appareil de production de vide. Les systèmes de mise en circulation de liquide par air-lift en vue d'effectuer un prélèvement ou un contrôle du liquide comprennent généralement un séparateur assurant la séparation entre le liquide et le gaz moteur du système d'air-lift et un dévésiculeur assurant la coalescence des gouttelettes transférées avec le flux gazeux sortant du séparateur afin de parachever la séparation gaz-liquide et d'assurer le retour des gouttelettes vers le circuit de procédé. L'air sortant du dévésiculeur passe à travers un filtre qui arrête les aérosols contaminés.

Une telle installation présente des problèmes délicats dus au fait que le gaz sortant du dévésiculeur a un taux d'humidité plus ou moins grand. En effet, le gaz ayant séjourné au sein ou au contact du liquide radioactif s'est chargé non seulement en aérosols contaminés mais également en humidité et, dans les cas les plus défavorables, peut être saturé en humidité.

L'air saturé cheminant à travers les installations de traitement de gaz perd progressivement l'excès d'eau entraînée sous forme de vésicules ou de gouttelettes mais ne peut pas voir son taux d'humidité abaissé car tous les traitements appliqués sont base d'effet mécanique. Comme les tuyauteries peuvent cheminer à travers des salles différentes, la température du gaz peut varier à cause des variations de température d'une salle à l'autre. D'autre part, un abaissement de température peut également être provoqué par une détente de l'air dans un appareil. Ces variations de température peuvent entraîner la condensation de la vapeur d'eau qui peut alors se déposer sur le filtre. La présence d'eau au sein du média filtrant abaisse dans des proportions importantes son efficacité et peut même l'annuler lorsque le filtre est totalement humide en créant un transfert liquide/liquide. Ceci a pour conséquence que la centrale de production de vide n'est plus protégée de la contamination.

La présente invention a pour but de remédier à ces inconvénients en proposant un procédé et un dispositif de désaturation du gaz extrait d'un tel système de transfert de liquide, c'est-à-dire d'en diminuer le taux d'humidité afin qu'il ne soit plus saturé et que les filtres conservent leur efficacité.

Le procédé objet de l'invention sert à la désaturation du gaz extrait d'un système de transfert de liquide sous vide, le transfert étant effectué en sus de l'effet de l'application du vide à l'aide d'un gaz moteur injecté dans ce liquide et le gaz extrait circulant dans un circuit d'extraction. Selon la principale caractéristique de ce procédé, on injecte un gaz sec dans le circuit d'extraction afin de réaliser un mélange gazeux ayant un taux d'humidité inférieur à celui du gaz sortant du système de transfert.

Selon un mode préféré de réalisation applicable lorsque l'extraction du gaz se fait à l'aide d'un appareil servant à créer une dépression, on utilise l'atmosphère ambiante d'un local donné comme source de gaz sec, celui-ci étant aspiré dans le circuit d'extraction, grâce audit appareil, à travers une conduite ayant une première extrémité débouchant dans le local et une deuxième extrémité débouchant dans le circuit d'extraction.

L'invention a également pour objet un système de transfert de liquide sous vide auquel est appliqué le procédé. Selon la principale caractéristique de ce système, celui-ci comporte une conduite ayant une extrémité communiquant avec une source de gaz sec qui débouche dans le dévésiculeur et le filtre.

De préférence, lorsque l'extraction du gaz se fait à l'aide d'un appareil servant à créer une dépression, la source de gaz sec est constituée par l'atmosphère ambiante d'un local donné, la première extrémité de ladite conduite débouchant à l'intérieur de ce local.

Eventuellement, la source de gaz sec peut être constituée par un appareil de dessication servant à abaisser le taux d'humidité d'un gaz provenant d'une autre source.

L'invention apparaîtra mieux à la lecture de la description qui va suivre, donnée à titre purement illustratif et nullement limitatif, en référence aux dessins annexés dans lesquels :

- la figure 1 est une vue schématique en élévation d'un système de transfert de liquide équipé d'un dispositif conforme à l'invention, et

- la figure 2 est une vue schématique à échelle agrandie du dispositif objet de l'invention.

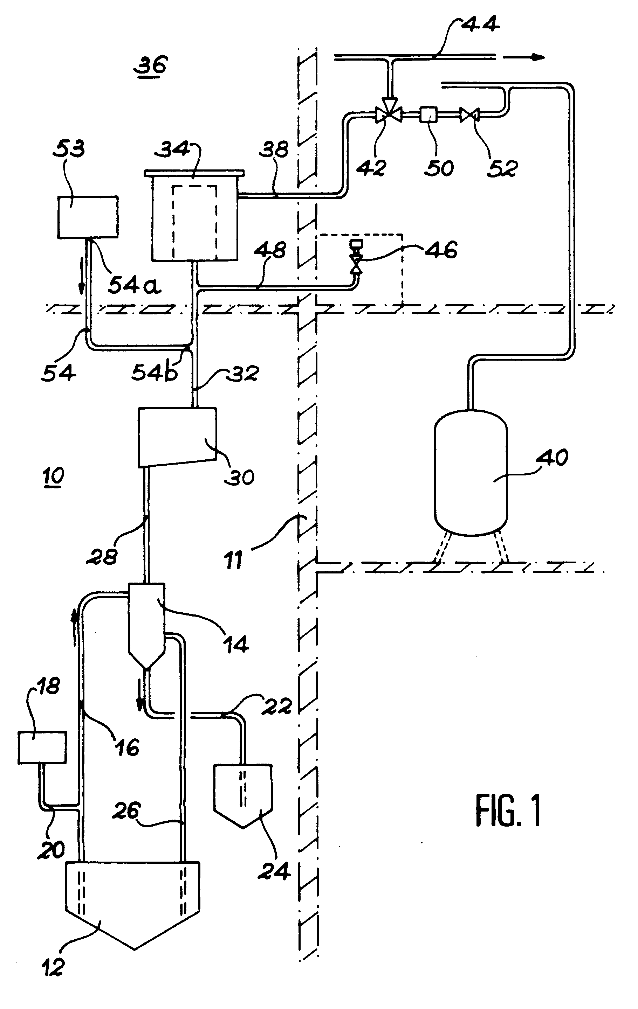

Si l'on se reporte à la figure 1, on voit un système de transfert de liquide à l'intérieur d'un local 10 entouré d'une protection biologique pouvant être constituée par des parois de béton épaisses telles que 11. Le liquide à échantillonner est contenu dans une cuve 12 reliée à un séparateur 14 situé audessus de cette cuve par une conduite d'alimentation 16. Une source d'air comprimé 18 est reliée à la conduite 16 par une conduite 20. La partie inférieure du séparateur 14 est reliée par une conduite 22 à une cuve 24 de collecte du liquide. Si nécessaire, un tuyau de trop-plein 26 relie le séparateur 14 à la cuve 12. Une autre conduite 28 relie la partie supérieure du séparateur 14 à un dévésiculeur 30 situé au-dessus de celui-ci. Le dévésiculeur est relié par une conduite 32 à un filtre 34, lequel peut se trouver à l'intérieur d'un local 36 différent du local 10. Une conduite 38 relie le filtre 34 à un appareil servant à créer une dépression, par exemple une centrale de vide 40. Si nécessaire, une électrovanne 42 met la conduite 38 en communication avec un évent par l'intermédiaire d'une conduite 44. Eventuellement, un diaphragme 50 et une vanne manuelle 52 complètent le système. Le diaphragme 50 et la vanne 52 sont montés sur la conduite 38 en aval de l'électrovanne 42 par rapport au sens de circulation du gaz dans cette conduite, c'està-dire du filtre 34 vèrs la centrale de vide 40. Le système est complété par un dispositif de décontamination 46 relié à la conduite 32 par une conduite 48.

Le fonctionnement d'un tel système est le suivant :

Lorsque la centrale de vide 40 est mise en marche, une dépression est créée à l'intérieur du circuit se trouvant entre la cuve 12 et la centrale 40. Cette dépression a pour effet de faire monter le liquide dans la conduite d'alimentation 16. A ce moment, on injecte de l'air comprimé dans cette conduite grâce à la source 18 et à la conduite 20. Le point où la conduite 20 débouche dans la conduite d'alimentation 16 est choisi de manière à ce que la conduite 20 débouche dans la masse liquide. Il se crée alors des bulles qui sont aspirées par le vide créé par la centrale 40 et le liquide s'élève dans la conduite 16 jusqu'au séparateur 14. Dans ce dernier est effectuée la séparation du gaz et du liquide, le liquide tombant à la partie inférieure du séparateur 14 et descendant jusqu'au dispositif de prélèvement 24 le long de la conduite 22. Le gaz séparé monte le long de la conduite 28 jusqu'au dévésiculeur 30 qui sert à séparer les dernières gouttelettes qui auraient pu être entraînées avec le gaz. Ce dernier passe ensuite le long de la conduite 32 puis à travers le filtre 34 qui arrête les aérosols contaminés éventuellement transportés par le gaz. Celui-ci passe ensuite le long de la conduite 38 et est évacué soit vers l'évent à travers la vanne 44, soit vers la centrale de vide 40 à travers la vanne 52.

Comme indiqué plus haut, le gaz sortant du dévésiculeur 30, bien qu'il ait été débarrassé des dernières gouttelettes de liquide, présente encore un taux d'humidité plus ou moins important et peut même être saturé en humidité. Afin d'abaisser le taux d'humidité et de maintenir le pouvoir filtrant du filtre 34, de l'air sec est introduit dans la conduite 32 grâce à une conduite 54 qui débouche dans cette dernière. On obtient ainsi dans la conduite 32, en aval du point où débouche la conduite 54, un mélange gazeux dont le taux d'humidité est nettement inférieur à celui du gaz sortant du dévésiculeur 30. C'est donc un air ou un gaz présentant un degré d'humidité suffisamment faible pour ne pas diminuer l'efficacité du filtre 34 qui passe à travers ce dernier.

La figure 1 représente le mode de réalisation préféré dans lequel la source de gaz sec est constituée par l'atmosphère ambiante d'un local donné, par exemple le local 36 dans lequel se trouve le filtre 54. Dans ce cas, la première extrémité 54a de la conduite 54 se trouve à l'intérieur du local 36 et débouche librement dans celui-ci.

Cette solution présente l'avantage d'être extrêmement simple puisque le dispositif de l'invention est réduit à la seule conduite 54, et peu coûteuse puique c'est l'air présent dans le local 36 qui est aspiré dans la conduite 54 puis dans le reste du circuit compris entre la conduite 32 et la centrale 40 par cette dernière. Cette disposition permet en outre, dans le cas des airlifts sous vide, non seulement d'abaisser le taux d'humidité du gaz sortant du dévésiculeur 30,mais d'assécher les circuits. En effet, la seule mise sous vide d'un système d'air-lift (c'est-à-dire sans injection d'air comprimé venant de la source 18) ne provoque aucun transfert de liquide mais par contre provoque une entrée d'air dans le circuit à travers la conduite 54. Comme l'air transféré dans le circuit de traitement des gaz du système à air-lift à travers la conduite 54 a un taux d'humidité très bas, il se charge de vapeur d'eau ou d'autres liquides par phénomène d'évaporation et assèche progressivement les circuits qu'il traverse. Eventuellement, si l'air ou le gaz provenant du local 36 ou d'une autre source n'est pas suffisamment sec, on peut prévoir un appareil de dessication 53 à l'entrée de la conduite 54 afin d'abaisser le taux d'humidité de ce gaz.

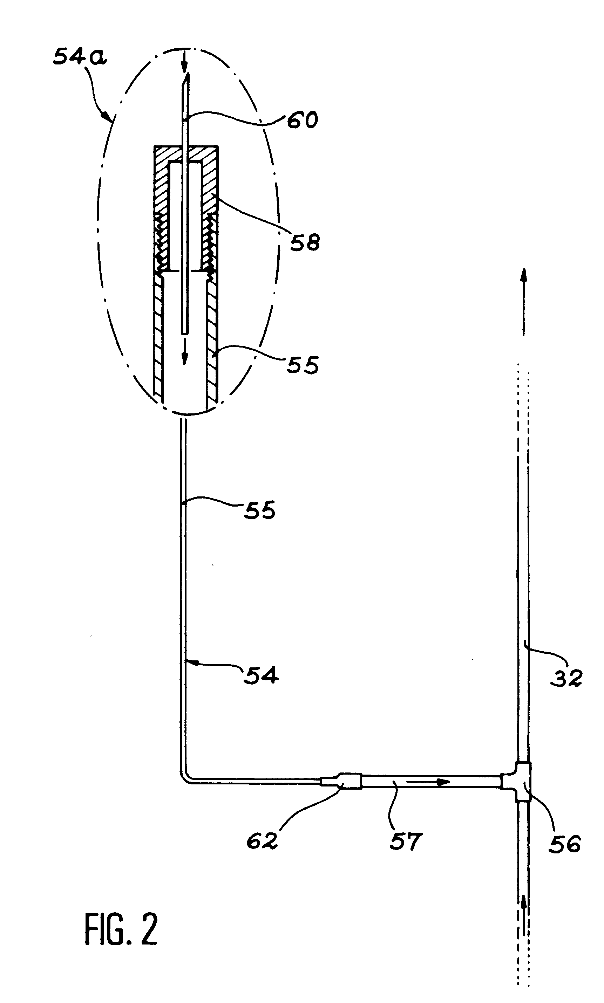

La figure 2 montre de manière plus détaillée la constitution de la conduite 54. On voit que celle-ci se compose d'un tube coudé 55 de faible diamètre (par exemple 6 mm) se raccordant par un raccord 62 à un tube de plus grand diamètre 57. Ce dernier se raccorde par un té 56 à la conduite 32. L'extrémité 54a de la conduite 55 représentée à échelle agrandie comprend un raccord 58 pouvant se visser sur l'extrémité du tube 55 et équipé d'un tube 60 de faible diamètre (par exemple 1,6 mm). Bien entendu, il ne s'agit là que d'un exemple particulier de construction réalisé à partir d'éléments facilement disponibles dans le commerce, mais on ne sortirait pas du cadre de l'invention en utilisant une construction différente. Le tube de faible diamètre 60 constitue un orifice calibré permettant de régler le débit d'air à travers la conduite 54. Cette entrée d'air est calibrée en fonction du débit nominal du système de transfert, du taux d'humidité de l'air assurant la désaturation et des températures des différents fluides et du filtre. L'utilisation d'un raccord tel que celui qui est illustré à la figure 2 peut être faite soit dans une zone accessible à l'intervention directe si le local 36 est une enceinte de confinement, soit à l'aide d'un télémanipulateur s'il s'agit d'une enceinte blindée.

Ainsi, le procédé et le dispositif objets de l'invention présentent des avantages intéressants puisqu'ils permettent d'abaisser le taux d'humidité du gaz extrait d'un système de transfert par air-lift et donc d'éviter la détérioration de l'efficacité des filtres se trouvant sur les circuits de vide, ce qui évite la contamination de ces circuits. De plus, ils permettent d'assécher le circuit de vide par simple mise en route de la pompe à vide sans que le système de transfert de liquide soit en fonctionnement. On peut ainsi assécher les circuits de traitement chaque fois que cela est nécessaire, par exemple à la suite d'un dysfonctionnement pouvant être provoqué par l'utilisation d'un vide à une valeur trop élevée. Enfin, le dispositif est simple et facile à installer, donc peu coûteux, d'autant plus qu'il peut être réalisé à partir d'éléments facilement disponibles dans le commerce.

Enfin, il est bien entendu que l'invention ne se limite pas au seul mode de réalisation qui vient d'être décrit, mais qu'on peut envisager des variantes sans sortir pour autant du cadre de l'invention. En effet, la construction de la conduite 54 peut être quelconque pourvu qu'elle assure la liaison entre une source de gaz sec (réservoir d'air ou atmosphère ambiante d'un local donné) et la conduite 32.

## Revendications

1. Procédé de désaturation du gaz extrait d'un système de transfert de liquide sous vide, le transfert étant effectué en sus de l'effet de l'application du vide à l'aide d'un gaz moteur injecté dans ce liquide et le gaz extrait circulant dans un circuit d'extraction, caractérisé en ce qu'on injecte un gaz sec dans le circuit d'extraction afin de réaliser un mélange gazeux ayant un taux d'humidité inférieur à celui du gaz sortant du système de transfert.

2. Procédé selon la revendication 1, caractérisé en ce que, l'extraction du gaz se faisant à l'aide d'un appareil (40) servant à créer une dépression, on utilise l'atmosphère ambiante d'un local donné (36) comme source de gaz sec, celui-ci étant aspiré dans le circuit d'extraction grâce audit appareil (40), à travers une conduite (54) ayant une première extrémité (54a) débouchant dans le local (36) et une deuxième extrémité (54b) débouchant dans le circuit d'extraction.

3. Système de transfert de liquide sous vide comportant une conduite d'alimentation du liquide (16) reliée à un séparateur liquide-air (14), le transfert étant effectué en sus de l'effet de l'application du vide à l'aide d'une source d'air comprimé (18) reliée à cette conduite d'alimentation (16) en amont de ce séparateur (14), le gaz séparé circulant dans un circuit d'extraction comprenant un dévésiculeur (30) suivi d'un filtre (34), caractérisé en ce qu'une conduite (54) ayant une extrémité (54a) communiquant avec une source de gaz sec (36) débouche dans le circuit d'extraction entre le dévésiculeur et le filtre.

4. Système selon la revendication 3, caractérisé en ce que, l'extraction du gaz se faisant à l'aide d'un appareil servant à créer une dépression (40), la source de gaz sec est constituée par l'atmosphère ambiante d'un local donné (36), la première extrémité (54a) de ladite conduite (54) débouchant à l'intérieur de ce local (36).

5. Dispositif selon la revendication 3, caractérisé en ce que la source de gaz sec est constituée par un appareil de dessication (53) servant à abaisser le taux d'humidité d'un gaz provenant d'une autre source.

## Claims

1. Process for the desaturation of the gas extracted from a liquid transfer system under vacuum, the transfer being carried out, besides under the effect of vacuum application, witn the aid of a motor gas injected into said liquid and the extracted gas circulating in an extraction circuit, characterized in that a dry gas is injected into the extraction circuit in order to produce a gaseous mixture having a moisture content below that of the gas leaving the transfer system.

2. Process according to claim 1, characterized in that the extraction of the gas takes place with the aid of an aparatus (40) used for producing a pressure drop, use being made of the ambient atmosphere of a given room (36) as the dry air source, the latter being sucked into the extraction circuit means of said apparatus (40), through a duct (54) having a first end (54a) issuing into said room (36) and a second end (54b) issuing into the extraction circuit.

3. System for the transfer of liquid under vacuum comprising a supply pipe for the liquid (16) connected to a liquid-air separator (14), the transfer taking place, besides under the effect of the vacuum application, with the aid of a compressed air source (18) connected to said supply pipe (16) upstream of said separator (14), the separated gas flowing in an extraction circuit incorporating a devesiculator (30) followed by a filter (34), characterized in that a pipe (54) having an end (54a) linked witn a dry gas (36) issues into the extraction circuit between the devesiculator and the filter.

4. System according to claim 3, characterized in that the extraction of the gas takes place with the aid of an apparatus (40) used for producing a pressure drop, the dry gas source being constituted by the ambient atmosphere of a given room (36), the first end (54a) of said duct (54) issuing into said room (36).

5. System according to claim 3, characterized in that the dry gas source is constituted by a drying apparatus (53) used for lowering the moisture content of a gas from another source.

**Patentansprüche**

1. Verfahren sum Desaturieren von aus einem Unterdrucktransportsystem für Flüssigkeiten extrahiertem Gas, wobei der Transport zusätzlich sin der Wirkung des angelegten Unterdruckkes mit Hilfe eines Trägergases erfolgt, welches in diese Flüssigkeit injiziert wird und das extrudierte Gas in einer Extraktionsleitung strömt,
dadurch **gekennzeichnet,**
daß man in die Extraktionsleitung ein trockenes Gas injiziert, um eine gasförmige Mischung zu realisieren, deren Feuchtigkeitsgehalt unterhalb des Feuchtigkeitsgehaltes des aus dem Transportsystem austretenden Gases liegt.

2. Verfahren nach Anspruch 1, dadurch gekennzeichnet, daß die Extraktion des Gases mit Hilfe einer Vorrichtung (40) erfolgt, welche zum Erzeugen eines Unterdruckes dient, daß man die Umgebungsatmosphäre eines gegebenen Ortes (36) als Trockengasquelle benutzt, wobei dieses in die Extraktionsleitung mit Hilfe jener Vorrichtung (40) hineingesaugt wird und zwar über eine Leitung (54), welche ein erstes Ende (54a) aufweist, welches in den Ort (36) mündet und ein zweites Ende (54b) aufweist, welches in die Extraktionsleitung mündet.

3. System zum Transport von Flüssigkeit unter Unterdruck mit einer Speiseleitung (16) für die Flüssigkeit, welche an einen Flüssigkeits-Luft-Separator (14) angeschlossen ist, wobei der Transport außer mittels der Wirkung des angelegten Unterdruckes mit Hilfe einer Druckgasquelle (18) erfolgt, welche an die Speiseleitung (16) strömungsmäßig vor dem Separator (14) angeschlossen ist, und wobei das abgetrennte Gas in einer Extraktionsleitung strömt, welche einen Tröpfchenabscheider, dem ein Filter (34) nachgeordnet ist, aufweist,
dadurch **gekennzeichnet,**
daß eine Leitung (54), welche ein mit einer Trockengasquelle (36) in Strömungsverbindung stehendes Ende (54a) aufweist, zwischen dem Tröpfchenabscheider und dem Filter in die Extraktionsleitung mündet.

4. System nach Anspruch 3, dadurch gekennzeichnet, daß die Extraktion des Gases mit Hilfe einer Einrichtung zum Erzeugen eines Unterdruckes erfolgt.

5. Einrichtung nach Anspruch 3, dadurch gekennzeichnet, daß die Trockengasquelle aus einer Trocknungsvorrichtung (53) besteht, mit deren Hilfe der Feuchtigkeitsgehalt eines aus einer anderen Quelle stammenden Gases verminderbar ist.

FIG. 1

FIG. 2